# DEMANDE DE BREVET EUROPEEN

(11) **EP 1 129 911 A1**
(43) Date de publication de la demande: **05.09.2001**
(21) Numéro de dépôt: 01400550.8
(22) Date de dépôt: 02.03.2001
(51) Int. Cl.: B60R 21/34, B62D 25/10

(54) **Agencement pour la réception d'un piéton sur un capot de véhicule automobile**

(30) Priorité: 03.03.2000 FR 0002732
(71) Demandeur: Renault, 92100 Boulogne Billancourt (FR)
(72) Inventeur: Boudard, Emmanuel, 78960 Voisins le Bretonneux (FR); Suss, Marc, 92170 Vanves (FR)

(57) **Abrégé**

L'invention propose un agencement pour la réception d'un piéton sur un capot de véhicule automobile qui comporte une partie avant qui est délimitée verticalement par une face avant (18) transversale du véhicule, deux éléments latéraux opposés et une cloison arrière (22) transversale commune avec un habitacle, et qui est délimitée dans sa partie supérieure par le capot (12), du type dans lequel un compartiment moteur (26) agencé dans la partie avant (14) comporte, d'avant en arrière, une traverse (28) horizontale, un groupe motopropulseur (30), et une cloison verticale (32) transversale pour un chauffage du véhicule, caractérisé en ce qu'un premier jeu (J1) est agencé entre une face (34) de doublure du capot (12) et la traverse (28) et en ce qu'un deuxième jeu (J2) est agencé entre la face (34) de doublure et la cloison transversale (32) de chauffage, pour permettre la flexion du capot (12) lors d'une collision avec le piéton.

## Description

L'invention concerne un agencement pour la réception d'un piéton sur un capot de véhicule automobile.

L'invention concerne plus particulièrement un agencement pour la réception d'un piéton sur un capot de véhicule automobile lors d'une collision frontale, du type dans lequel le véhicule comporte une partie avant agencée en avant d'une cellule formant habitacle du véhicule, qui est délimitée verticalement par une face avant transversale du véhicule, deux éléments latéraux opposés et une cloison arrière transversale commune avec la cellule et qui est délimitée horizontalement dans sa partie supérieure par le capot, du type dans lequel un compartiment moteur est agencé dans la partie avant et comporte, entre la face avant et la cloison arrière transversale, une traverse sensiblement horizontale, un groupe motopropulseur et une cloison verticale transversale d'isolation pour un chauffage du véhicule.

On connaît de nombreux exemples d'agencements de ce type.

Dans la plupart de ceux-ci, le capot recouvre la traverse et la cloison suivant des jeux verticaux réduits. Ces jeux sont par exemple agencés de façon à permettre une bonne fermeture du capot sans que celui-ci ne vienne toucher ni la traverse ni la cloison arrière transversale. Ils sont par exemple déterminés par l'épaisseur d'un verrou de fixation du capot sur la traverse et/ou de joints d'isolation qui sont portés par la traverse et la cloison arrière transversale et qui sont destinés à venir au contact du capot en position fermée de celui-ci.

Une telle conception présente un inconvénient majeur dans le cas où un piéton est fauché par le véhicule et se trouve projeté sur le capot.

On a en effet constaté que la traverse est généralement agencée à une distance longitudinale de l'avant du véhicule correspondant à une zone d'impact de la tête d'un enfant et que la cloison d'isolation de chauffage est généralement agencée à une distance longitudinale de l'avant du véhicule correspondant à une zone d'impact pour la tête d'un adulte.

Dans cette configuration, les jeux réduits qui existent entre d'une part le capot et d'autre part la traverse et la cloison arrière transversale de chauffage ne permettent pas une flexion suffisante du capot. Le capot risque en effet de se déformer localement et de venir au contact de la traverse et/ou de la cloison arrière transversale, de sorte que, en cas de choc, la tête de l'enfant ou de l'adulte qui est fauché par le véhicule risque de heurter une zone très rigide et subir ainsi de graves traumatismes de régions supérieures du corps comme la tête, le cou ou les épaules.

Pour remédier à cet inconvénient, l'invention propose un agencement du type décrit précédemment qui permet une flexion accrue du capot de façon que celui se comporte comme un élément élastique et amortisse l'impact d'une tête de piéton à proximité de la traverse et de la cloison arrière transversale.

Dans ce but, l'invention propose un agencement du type décrit précédemment, caractérisé en ce qu'un premier jeu déterminé est agencé entre une face de doublure intérieure du capot et la traverse et en ce qu'un deuxième jeu déterminé est agencé entre une face de doublure intérieure du capot et la cloison transversale d'isolation du chauffage, de façon à permettre la flexion élastique verticale du capot selon une direction sensiblement verticale et sur tout ou partie de la longueur du capot en cas de collision avec un piéton.

Selon d'autres caractéristiques de l'invention :
- la traverse comporte successivement, d'avant en arrière, une paroi sensiblement horizontale, un embouti formant une gouttière transversale et un bord horizontal qui s'étend seulement sur une largeur déterminée de la traverse,
- le premier jeu déterminé est agencé entre le bord horizontal de la traverse et la face de doublure du capot,
- le deuxième jeu est agencé entre l'extrémité supérieure de la cloison de chauffage et la face de doublure du capot suivant toute la largeur de la cloison de chauffage,
- la face de doublure du capot est localement mise en forme selon un premier et un deuxième retrait respectivement au droit du bord horizontal de la traverse et au droit de l'extrémité supérieure de la cloison de chauffage de manière que les premier et deuxième jeux soient chacun supérieurs ou égaux à environ 20 millimètres,
- le bord horizontal de la traverse est agencé à une distance longitudinale de l'avant du véhicule correspondant à une zone d'impact pour la tête d'un enfant et la cloison d'isolation de chauffage est agencée à une distance longitudinale de l'avant du véhicule correspondant à une zone d'impact pour la tête d'un adulte,
- les bords de l'embouti formant gouttière sont écartés longitudinalement d'une distance déterminée de manière que la paroi avant sensiblement horizontale de la traverse soit agencée en dehors de la zone d'impact pour tête d'enfant,
- la traverse porte un radiateur du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement selon l'invention ;
- la figure 2 est une section selon un plan longitudinal médian 2-2 de l'agencement de la figure 1 ;
- les figures 3 et 4 sont des vues en coupe transversale par les plans 3-3 et 4-4 de la figure 2 de l'agencement selon l'invention ; et
- la figure 5 est une vue de dessous du capot en correspondance des éléments de la partie avant représentés en vue fantôme conformément à l'invention.

Dans la description qui va suivre, des chiffres de référence identiques désignent des pièces identiques ou ayant des fonctions similaires.

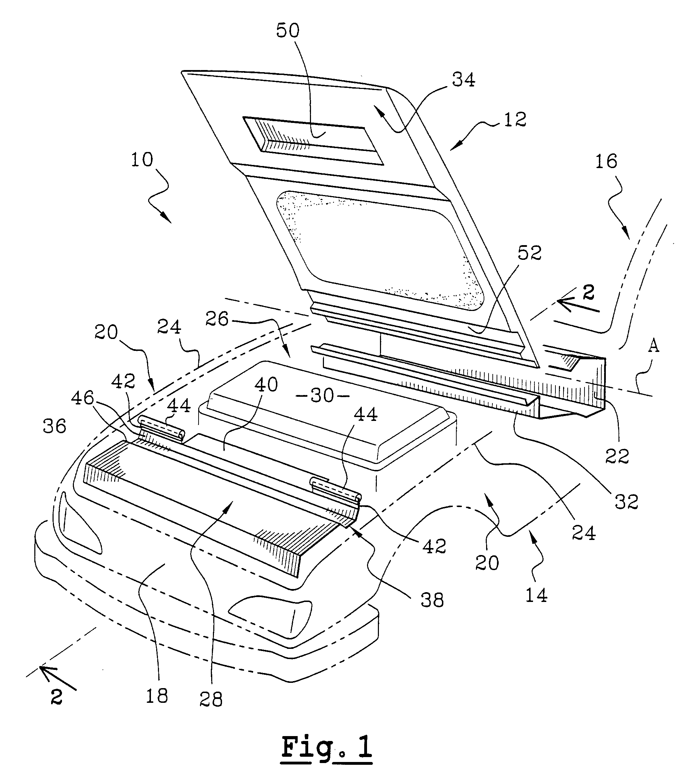

On a représenté à la figure 1 l'ensemble d'un agencement 10 pour la réception d'un piéton sur un capot 12 de véhicule automobile lors d'une collision frontale.

De manière connue, le véhicule comporte une partie avant 14 qui est agencée en avant d'une cellule 16 formant habitacle du véhicule. La partie avant 14 est délimitée verticalement par une face avant 18 transversale du véhicule, deux éléments latéraux 20 opposés, notamment des ailes avant du véhicule, et une cloison arrière 22 transversale qui est commune avec la cellule 16. La partie avant 14 est par ailleurs délimitée par le capot 12 qui, en position fermée, est agencé sensiblement dans le plan supérieur sensiblement horizontal qui passe par des arêtes supérieures 24 des éléments latéraux 20.

Le capot 12 de la figure 1 a été représenté en position ouverte, articulé autour d'un axe A transversal agencé à proximité de la cloison arrière 22. Toutefois, cette disposition n'est pas limitative de l'invention, et le capot 12 pourrait être articulé autour d'un axe transversal agencé à proximité de la face avant 18 ou autour d'un axe longitudinal.

Un compartiment moteur 26 est agencé dans la partie avant 14 et comporte, d'avant en arrière entre la face avant 18 et la cloison arrière 22 transversale, une traverse 28 sensiblement horizontale qui est par exemple destinée à porter un radiateur de refroidissement du véhicule, un groupe motopropulseur 30, et une cloison verticale 32 transversale d'isolation pour un chauffage (non représenté) du véhicule qui est agencé, de manière connue, entre la cloison verticale 32 d'isolation et la cloison arrière 22.

Conventionnellement, dans une telle configuration, il n'existe aucun jeu prédéterminé entre le capot 12 et la traverse 28, ni entre le capot 12 et la cloison 32 d'isolation de chauffage, de sorte que le capot ne peut pas se déformer en flexion.

En effet, en l'absence d'un quelconque jeu, un piéton qui serait fauché par le véhicule courrait le risque de voir sa tête heurter la traverse 28, le groupe motopropulseur 30 ou la cloison 32 d'isolation de chauffage, le capot 12 étant plaqué par le choc pratiquement directement au contact de ces éléments.

En particulier, un enfant courrait le risque de voir sa tête heurter la traverse 28, un adolescent courrait le risque de voir sa tête heurter la zone du groupe motopropulseur 30 et un adulte courrait, quand à lui, le risque de voir sa tête heurter la cloison 32 d'isolation de chauffage, ces éléments étant agencés sensiblement dans des zones correspondant aux points d'impacts correspondants d'un individu qui serait fauché par le véhicule.

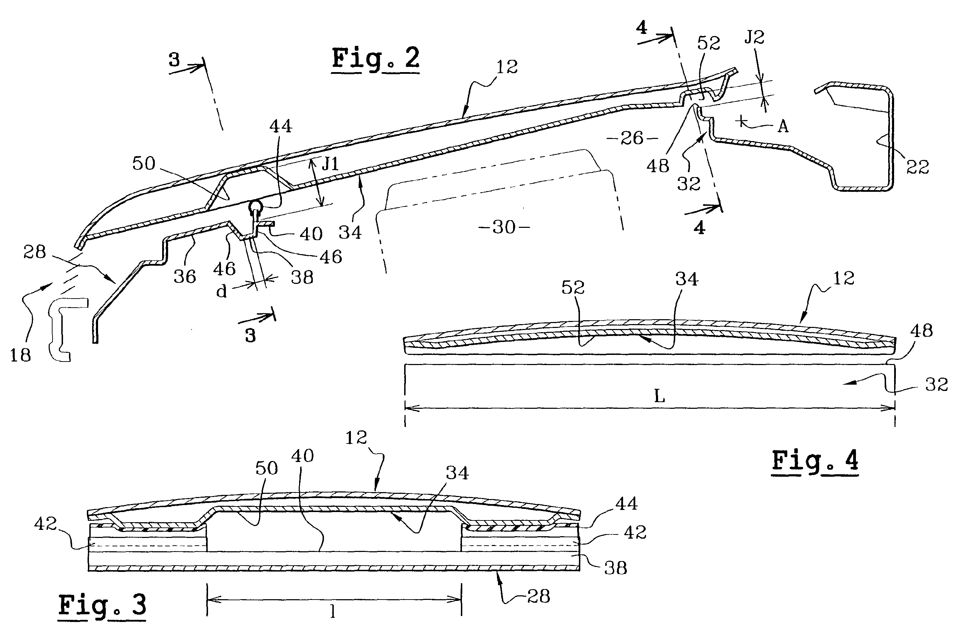

Comme l'illustre la figure 2, pour remédier à cet inconvénient, l'invention propose un agencement 10 du type décrit précédemment, caractérisé en ce qu'un premier jeu "J1" déterminé est agencé entre une face 34 de doublure intérieure du capot 12 et la traverse 28, et en ce qu'un deuxième jeu '"J2" déterminé est agencé entre la face 34 de doublure intérieure du capot 12 et la cloison transversale 32 d'isolation du chauffage, de façon à permettre la flexion élastique verticale du capot 12 selon une direction sensiblement verticale et sur toute la longueur du capot en cas de collision avec un piéton.

A cet effet, comme l'illustrent les figures 2 et 3, la traverse 28 comporte successivement, d'avant en arrière, une paroi 36 sensiblement horizontale, un embouti 38 formant une gouttière transversale, et un bord horizontal 40 qui s'étend seulement sur une largeur "I" déterminée de la traverse 28. Le premier jeu "J1" déterminé est agencé entre le bord horizontal 40 de la traverse 28 et la face de doublure 34 du capot 12.

La paroi 36 sensiblement horizontale est destinée, de manière conventionnelle, à assurer la rigidité du compartiment moteur et/ou à porter un verrou (non représenté) pour la fermeture du capot 12. L'embouti 38 formant gouttière transversale permet de séparer la paroi 36 horizontale du bord horizontal 40 de la traverse 28 au droit duquel est agencé le jeu "J1".

Comme l'illustre la figure 3, le bord horizontal 40 de la traverse 28 est agencé deux parois sensiblement verticales 42 qui sont notamment destinées à porter des joints 44 d'étanchéité du capot qui chevauchent lesdites parois 42 verticales. La largeur "l" de la cloison est déterminée de manière à permettre une flexion suffisante du capot 12 au voisinage du jeu "J1" tout en permettant une fermeture satisfaisante de celui-ci en appui sur les joints 44.

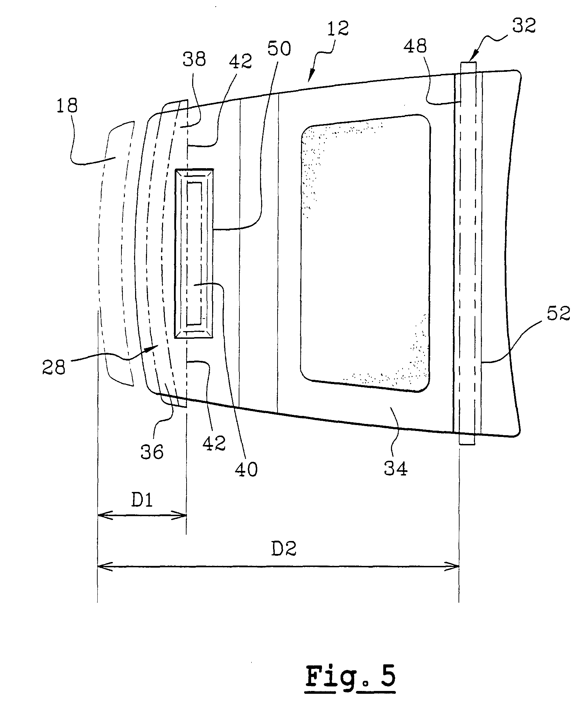

Avantageusement, comme l'illustre la figure 5, le bord horizontal 40 de la traverse 28, au droit duquel est agencé le jeu "J1", et le premier retrait 50 correspondant du capot 12 sont agencés à une distance longitudinale "D1" de la face avant 18 du véhicule qui correspond à une zone d'impact pour la tête d'un enfant. Par ailleurs, comme l'illustre la figure 2, les bords 46 de l'embouti 38 formant gouttière sont écartés longitudinalement d'une distance "d" déterminée de manière que la paroi 36 avant sensiblement horizontale de la traverse 28 soit agencée en dehors de la zone d'impact pour tête d'enfant.

A l'arrière du compartiment moteur 26, comme l'illustre la figure 2, le deuxième jeu "J2" est agencé entre l'extrémité supérieure 48 de la cloison 32 de chauffage et la face 34 de doublure du capot.

Avantageusement, comme l'illustre la figure 4, le jeu "J2" est agencé suivant toute la largeur "L" de la cloison de chauffage. En effet, le capot 12 étant articulé par rapport à l'axe A représenté aux figures 1 et 2, la cloison 32 de chauffage ne participe pas à l'appui du capot, de sorte qu'il est possible d'étendre la largeur "L" selon laquelle est agencé le jeu "J2" suivant toute la largeur du capot 12 et de la cloison 32.

D'une façon analogue à ce qui a été décrit précédemment à la figure 5, l'extrémité supérieure 48 de la cloison 32 d'isolation de chauffage, au droit duquel est agencé le jeu "J2", et le deuxième retrait 52 correspondant du capot 12 sont agencés à une distance longitudinale "D2" de la face avant du véhicule correspondant à une zone d'impact pour la tête d'un adulte.

Enfin, dans le mode de réalisation préféré de l'invention, et comme illustré aux figures 1, 2 et 5, la face 34 de doublure du capot 12 est localement mise en forme, par exemple par emboutissage si le capot 12 est réalisé en tôle ou par moulage si le capot est réalisé en un matériau plastique, et il comporte un premier retrait 50 et un deuxième retrait 52, respectivement au droit du bord horizontal 40 de la traverse et au droit de l'extrémité supérieure 48 de la cloison 32 de chauffage, de manière que les premier jeu "J1" et deuxième jeu "J2" soient chacun au moins égal à environ 20 millimètres. Cette configuration permet avantageusement de conférer une possibilité de flexion élevée au capot 12, de sorte qu'un piéton qui serait reçu sur la capot 12 après avoir été fauché par le véhicule déformerait le capot 12 sans que celui-ci ne touche ni la traverse 28, ni le groupe motopropulseur 30, ni la cloison 32 d'isolation de chauffage 32. Ceci permet avantageusement de prévenir les risques de lésion crânienne dudit piéton.

L'invention propose donc un agencement de sécurité propre à réduire les conséquences d'un accident de la circulation au cours duquel un piéton serait fauché par le véhicule.

## Revendications

1. Agencement (10) pour la réception d'un piéton sur un capot de véhicule automobile lors d'une collision frontale, du type dans lequel le véhicule comporte une partie avant (14) agencée en avant d'une cellule (16) formant habitacle du véhicule, qui est délimitée verticalement par une face avant (18) transversale du véhicule, deux éléments latéraux (20) opposés et une cloison arrière (22) transversale commune avec la cellule (16) et qui est délimitée horizontalement dans sa partie supérieure par le capot (12), du type dans lequel un compartiment moteur (26) est agencé dans la partie avant (14) et comporte, entre la face avant (18) et la cloison arrière transversale (22), une traverse (28) sensiblement horizontale, un groupe motopropulseur (30), et une cloison verticale (32) transversale d'isolation pour un chauffage du véhicule,
**caractérisé en ce qu**'un premier jeu (J1) déterminé est agencé entre une face (34) de doublure intérieure du capot (12) et la traverse (28) et en ce qu'un deuxième jeu (J2) déterminé est agencé entre la face (34) de doublure intérieure du capot (12) et la cloison transversale (32) d'isolation du chauffage, de façon à permettre la flexion élastique verticale du capot (12) selon une direction sensiblement verticale et sur toute la longueur du capot (12) en cas de collision avec un piéton.

2. Agencement (10) selon la revendication précédente, **caractérisé en ce que** la traverse (28) comporte successivement d'avant en arrière, une paroi (36) sensiblement horizontale, un embouti (38) formant une gouttière transversale, et un bord (40) horizontal qui s'étend seulement sur une largeur (l) déterminée de la traverse (28).

3. Agencement (10) selon la revendication précédente, **caractérisé en ce que** le premier jeu (J1) déterminé est agencé entre le bord horizontal (40) de la traverse (28) et la face (34) de doublure du capot (12).

4. Agencement (10) selon l'une des revendications précédentes, **caractérisé en ce que** le deuxième jeu (J2) est agencé entre l'extrémité supérieure (48) de la cloison (32) de chauffage et la face (34) de doublure du capot (12) suivant toute la largeur (L) de la cloison (32) de chauffage.

5. Agencement (10) selon la revendication précédente prise en combinaison avec la revendication 4, **caractérisé en ce que** la face (34) de doublure du capot (12) est localement mise en forme selon un premier et un deuxième retrait (50, 52) respectivement au droit du bord horizontal (40) de la traverse (28) et au droit de l'extrémité supérieure (48) de la cloison (32) de chauffage de manière que les premier et deuxième jeux (J1, J2) soient chacun supérieurs ou égaux à environ 20 millimètres.

6. Agencement (10) selon l'une quelconque des revendications précédentes, **caractérisé en ce que** le bord (36) horizontal (40) de la traverse est agencé à une distance longitudinale (D1) de la face avant (28) du véhicule correspondant à une zone d'impact pour la tête d'un enfant et en ce que la cloison (32) d'isolation de chauffage est agencée à une distance longitudinale (D2) de la face avant (28) du véhicule correspondant à une zone d'impact pour la tête d'un adulte.

7. Agencement (10) selon la revendication précédente, **caractérisé en ce que** les bords (46) de l'embouti (38) formant gouttière sont écartés longitudinalement d'une distance (d) déterminée de manière que la paroi avant (40) sensiblement horizontale de la traverse (28) soit agencée en dehors de la zone d'impact pour tête d'enfant.

8. Agencement (10) selon l'une quelconque des revendications précédentes, **caractérisé en ce que** la traverse (28) porte un radiateur du véhicule.
